# EUROPEAN PATENT SPECIFICATION

(11) **EP 1 995 457 B1**
(45) Date of publication and mention of the grant of the patent: **12.08.2009**
(21) Application number: 08008645.7
(22) Date of filing: 08.05.2008
(51) Int. Cl.: F03G 7/04

(54) **Process for using geothermal energy**
Verfahren zur Nutzung von geothermisch Energie
Procédé pour l'utilisation d'énergie geothermique

(30) Priority: 23.05.2007 EE 200700065 U
(43) Date of publication of application: 26.11.2008
(73) Proprietor: Kudrin, Nikolai, 13611 Tallinn (EE)
(72) Inventor: Kudrin, Nikolai, 13611 Tallinn (EE)
(74) Representative: Uustalu, Juta-Maris

(56) References cited:
- DE-C1- 19 919 555
- US-A- 4 112 745
- US-A- 5 311 741
- US-A- 5 911 684

## Description

### Technical field

This invention relates to energetics, more particularly, this invention relates to a process for using geothermal energy of granite and basalt layers of the lithosphere of the Earth for industrial production of electric energy and heat.

### Background art

The inside of the Earth comprises a crust, a mantle and a core. The crust has a variable thickness, being 35-90 km thick under the continents and 10-15 km under the ocean. The crust is the uppermost layer, the information about the crust can be received directly from boreholes drilled to the depth of 2 to 13 km. The thickness of the crust was identified by seismic methods. The continental crust comprises several layers, wherein the upper layer is formed of sandstone, clay, limestone and other sedimentary rocks. There is a thick layer under the upper one and it comprises mainly of metamorphic rocks and granite, and there is a layer of basalt situated under them. The next layer under the crust is the mantle, which is about 2900 km thick, wherein there is yet another zone inside the mantle, 100 to 1000 times more plastic than lower and upper layers. This is a partially semi-liquid layer known as the asthenosphere, which means "weak layer". The layer above the asthenosphere is called lithosphere. The tectonic plates of the lithosphere determine the structure of the crust. A slow movement of masses takes place in the mantle, the heated material rises up and the cooled material sinks. The masses of the mantle pull the tectonic plates of the lithosphere into this endless movement. The temperature inside the Earth rises up to 5000-6000 °C, which is caused by the radioactive decay of the elements, whereby the heat separates and it can be used for example in the power plants operated by the heat of the Earth.

The document US 2006/0026961 (inventor Lucien Y Bronicki, published on February 9, 2006) describes a method and an apparatus for using geothermal energy to produce electric energy. The method uses a heat carrier to enchance the flow (water and/or steam and/or mixtures thereof), and has at least one inlet channel and at least one outlet channel. The method of the invention comprises the following steps: providing a first horizontal geothermal channel, which is used as inlet channel and providing a second horizontal geothermal channel, which is used as outlet channel, wherein said second horizontal channel is located higher than said first horisontal channel. A water density difference and a pressure difference are generated due to the difference of heights between the said two horizontal channels. The apparatus is used for enchancing the flow in the channel and it provides means for the producing the pressure difference between said first horizontal channel and said second horizontal channel and utilizing the water density difference induced due to temperature difference. Said first horizontal channel located deeper has an inlet, into which water is injected and thereafter water flows through the geothermal layer, where the channel was drilled and said second shallower channel has an outlet, through which the water heated in the geothermal layer is delivered to the surface. Heating of the heat carrier occurs due to the pressure difference and its own buoyancy. In a technology used today in the industry two horizontal channels are drilled parallel to each other in a bitumen layer at the depth of 300-400 m. Steam is injected into the bitumen deposit from the upper channel where it condenses and heats oil. The oil moves gradually into the lower channel where it is collected and delivered to the surface under pressure. The horizontal channels are located near the surface of the Earth and the apparatus operates as a heat pump with high energy consumption.

The Brockhaus Encyclopedia (Mannheim, 1989) discloses a method for using natural heat energy in a geothermal power plant. The temperature of the Earth's crust gradually increases with the increase of depth, and if the borehole is sufficiently deep (approximately 2000 m), it will create a possibility to produce hot water vapour, which may be used in geothermal power plant. The so-called Hot-Dry-Rock process is known for using the heat energy of the Earth. In order to use the energy of hot dry rocks situated at great depth, it is necessary to drill two vertical boreholes into these hot dry rocks at the certain distance form one another. This will create artificial reservoir by fracturing the rocks, water is pumped into a first borehole, having a crack as a result of drilling and then overheated water or water vapour rises via a second borehole to the surface of the Earth. This process requires to drill two boreholes, to widen artificially the cracks in the rocks. A sufficient amount of hot dry rocks must be under ground in order to heat the heat carrier.

The document US 5911684 (inventor James H Shnell, published on June 15, 1999) describes a system for geothermal production of electricity, wherein one or more substances is transported down a well to a depth at which geothermal heat (whether from brine or steam reservoirs or hot dry rock or magma) is sufficient to cause an endothermic reaction to occur such substances. The reaction products are then transported separately to the surface where the products undergo the reverse reaction, and energy from exothermic reaction is converted into electrical energy. The dehydrogenation of ethanol into hydrogen and ethylene oxide C₂H₅OH → H₂ + C₂H₄O is utilized as endothermic reaction. Palladium or copper are effective catalyst for this reaction. The corresponding exothermic reaction, providing energy outside of the well, is the hydrogenation of ethylene oxide into ethanol H₂ + C₂H₄O → C₂H₅OH wihtin the generating mechanism. The ethanol is condensed at the outlet of the genetaring mechanism and ultimately returned down the well for another cycle. This process requires the drilling a vertical well and using endothermic and exothermic reactions which have high costs.

The document US5253926 (by inventor Werner Foppe, published on October 19, 1993, same patent was published on October 27, 1996 as RU2068530) discloses the process for making general use of the Earth's heat and obtaining minerals in the zone of weakness (at depths of 13-30 km). The acquisition of the heat from hot dry rocks of lithosphere is achieved by drilling two vertical and approximately parallel boreholes into the deep zone of the continental lithosphere, to the depth between 13 and 30 kilometers, in which the shear strength of the rock suddenly decreases due to the overburden generated by the hydrostatic pressure. These vertical and parallel boreholes are lined with strong pipes and the pressure is raised artificially by pumping water inside. Cold water is pumped from the surface into a first borehole, and its pressure is sufficient to produce a hydraulic fracturing (hydrowreck) effect to create multiple fractured heating zones and the pumped cold water is heated geothermally by the heat of the fractured hot rocks, and it is conveyed via a second borehole, located at a certain distance from the first one to the surface, where the collected heat is used or minerals are obtained from the water. This process requires the drilling of vertical boreholes to the depth of approximately 15 to 30 km, but the production and lining these boreholes are connected with technical problems and have high cost.

### Disclosure of the invention

The interior of the Earth comprises a crust, a mantle and a core, wherein the temperature of the core can reach values over 6000 °C. The core is covered with the mantle, which has a temperature over 1000 °C. The crust and a part of the mantle form the lithosphere, which has a thickness of 70 km. Contemporary level of technical development allows to obtain only the heat of the lithosphere. The temperature of the interior of the Earth rises 20 °C for each kilometer of depth, therefore, the temperature of the lithosphere, 20 km deep, is 400 °C. The industrial usage of the heat of the Earth requires the establishment of shafts with the depth of 20 to 30 km, but such shafts do not exist yet.

The present invention offers the process for using geothermal energy wherein at least two parallel underground geothermal tunnels are built between two terrestrial electric power plants, so that a closed cycle is formed. A cold heat carrier is injected into these tunnels from the first power plant. Passing the geothermal tunnel, the cold heat carrier heats up and moves along the tunnel to the second power plant wherein the geothermal energy is transformed into electric energy. The heat carrier cools down during the transformation of energy and cooled down heat carrier is injected back to the circulation, i.e. into the geothermal tunnel, wherein the cooled down heat carrier heats up and is directed back to the first power plant. Hence the continuous process of energy accumulation and surrender takes place. The present method is realized by means of the geothermal tunnel. To construct the geothermal tunnel into the lithosphere to the depth of 20 km, the procedure should be as follows: based on the previous experience, the foundation of the vertical tunnels up to 15 km deep is rather diffucult and it is easier to establish a horizontal tunnel. into the lithosphere. The establishment of the underground geothermal tunnel begins from ground under the inclination angle α, the inclination will gradually decrease, if the tunnel goes down deeper and the inclination angle will become zero, as the tunnel reaches the basalt rocks. The tunnel is horizontal on a certain distance in the lithosphere and then the tunnel begins to rise gradually, wherein the angle of inclination increases from 0 to α degree. The total length of the tunnel is 1=1₁+1₂ +1₃, wherein 1₂=1₃ and these sections of the tunnel are sloped, wherein the angle of inclination alters and section 1₂ is the horizontal component of the tunnel. The maximum depth from the surface hₘₐₓ is known value. If the angle of inclination is 30 degrees, then hₘₐₓ= 1₁ x sin 30°, from this the length of a single inclined section is 1₁=2hₘₐₓ and the total length of the tunnel is 1 > 4hₘₐₓ. For the constructuion of such tunnel the available technologies for deep drilling and for underground tunnel construction can be used, wherein the tunnel 15 to 30 km deep is constructed into basalt at the temperature of 400 °C by automatic technics.

### Brief description of the drawings

Fig.1 schematically illustrates the geothermal tunnel;
Fig.2 to 4 illustrate possible different locations of the electric power plants.

### Detailed description

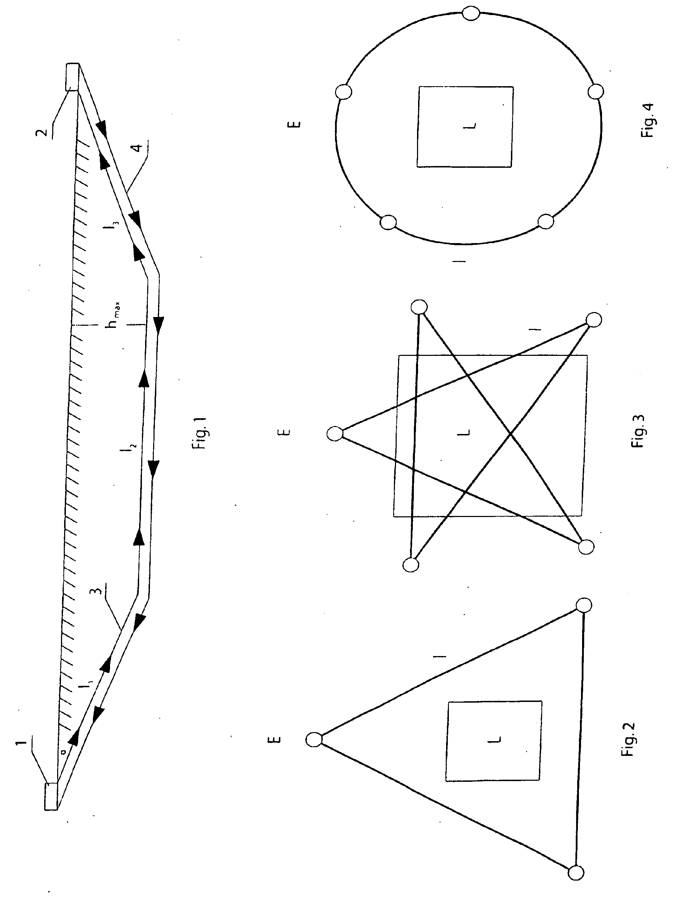

The present invention is realized by the means of the geothermal tunnels, wherein the total length of the tunnel shall be I > 4hₘₐₓ, which in case of hₘₐₓ =20 km is over 80 km. The establishment of tunnels 3, 4 (fig 1) between the electric power plants 1 and 2 begins from ground under the inclination angle α = 30 degrees and passing through the section 1₁ the inclination angle gradually decreases to zero. When the tunnel comes to the lithosphere at the depth hₘₐₓ = 20 km, it is horizontal on the length of the section 1₂ and throughout the length of the section 1₃, the tunnel begins to rise with the inclination angle growing from 0 to 30 degrees.

Such tunnel may be established between cities Helsinki and Tallinn, both cities have active electric power plants 1 and 2. These power plants are connected with the two parallel geothermal tunnels 3 and 4, constructed under the bottom of the Gulf of Finland at the depth of 20 km where heat carrier heats up to 400 °C and it is possible to upgrade these electric power plants to allow the use of geothermal energy. Inert gas is used as the heat carrier, as the structure of its molecules does not depend on the temperature. Cold heat carrier passes through the tunnel and heats up by geothermal energy wherein the structure of molecules does not depend on changes of temperature. Cold heat carrier is injected into the tunnels from the electric power stations. The heat carrier passes through the tunnel and heats by geothermal energy, heated heat carrier rises to the surface into the input of the electric power plant, wherein the heat of the Earth is converted into electric energy, wherein the heat carrier is cooled down during the conversion. The cooled down heat carrier is injected back into the geothermal tunnel from the electric power plant and the cooled down heat carrier heats passing through the geothermal tunnel and arrives to input of the electric power station wherein the heat is converted to electric energy, the heat carrier cools down and is injected into the circulation. To provide the cities L with electric energy using the geothermal energy in the electric power stations E may be positioned and connected into star connection (fig 2 and 3) or to connect into circular connection (fig 4).

## Claims

1. Process for using geothermal energy to produce the electric energy realizing by means of the geothermal tunnels (3,4) connected to the electrical power plants (1,2), wherein the geothermal tunnels are parallel and located at the depth of 15 to 30 km from the surface, the process comprises following steps: injecting the heat carrier into a first tunnel (3) of the electric power plants, the heat carrier heats by passing through the geothermal tunnel; conveying the heated heat carrier via a second geothermal tunnel (4) to the surface into the electric power plant, wherein converting the heat energy into the electric energy, **characterized by** that to realize the process, locating the geothermal tunnels (3,4) between at least two electrical power plants (1,2) from the surface the depth hₘₐₓ, wherein the total tunnel length is 1 > 4hₘₐₓ and I=I₁+I₂+I₃, wherein I₁=I₃=2hₘₐₓ and on the length of the sections I₁ and I₃ the inclination angle of the tunnel changes from 0 to α degrees and the section I₂ of the tunnel is horizontal; injecting the cold heat carrier to the geothermal tunnels from the electric power plants connected with tunnels; passing through tunnels the cold heat carrier heats and delivering the heated heat carrier to the electric power plants; converting the energy heated in the electrical power plant to electric energy, wherein cooling down of the heat carrier takes place and injecting the cooled down heat carrier subsequently into the circulation.

2. Process according to claim 1, **characterized by** that the inclination angle of the geothermal tunnel (3,4) has a maximum value of 30 degrees.

3. Process according to claim 1, **characterized by** that an inert gas is used as the heat carrier.

4. Process according to claim 1, **characterized by** that connecting more than two electric power plants (E) with the tunnels wherein the electric power plants are connected into star connection.

5. Process according to claim 1, **characterized by** that connecting more than two electric power plants (E) with the tunnels wherein the electric power plants are connected into circulation connection.

## Patentansprüche

1. Verfahren zur Nutzung von geothermischen Energie für die Produktion der Elektroenergie verwirklicht sich mittels der geothermischen Tunnels (3,4), die mit das elektrische Kraftwerk (1,2) verbunden sind, wo die geothermischen Tunnels parallel und von 15 km bis 30 km tief von der Oberfläche gelegen sind, der Verfahren involviert die folgenden Phasen: das Anstellen des Wärmeträgers in den ersten Tunnel (3) des Kraftwerks, der durch den geothermischen Tunnel gehenden Wärmeträger erwärmt wird; der Einlaß des geheizten Wärmeträgers über einen zweiten geothermischen Tunnel (4) zur Oberfläche in das elektrische Kraftwerk (1,2), worin sich die Wärmeenergie in die elektrische Energie wandelt, **dadurch gekennzeichnet, dass** um den Verfahren zu verwirklichen, soll die Zuordnung der geothermischen Tunnels zwischen mindestens zwei Kraftwerken von der Oberfläche in der maximalen Tiefe hₘₐₓ sein, wo die Gesamttunnel-Länge ist: 1 > 4hₘₐₓ und I= I₁+I₂+I₃; wo I₁=I₃=2hₘₐₓ, und auf der Länge der Abteilungen 1 und I₃ der Neigungswinkel der Tunnel-Änderungen von 0 bis ein α Grad ist, und die Abteilung I₂ des Tunnels horizontal angeordnet ist; das Anstellen des kalten Wärmeträgers zu den geothermischen Tunnels von den elektrischen Kraftwerken, der mit den Tunnels verbunden ist; der durch Tunnels gehende Wärmeträger erwärmt sich, und der Antransport des geheizten Wärmeträgers zu den Kraftwerken verwirklicht sich; das Umwandeln der Energie, die im Kraftwerk zur elektrischen Energie geheizt ist, wo das Abkühlen des Wärmeträgers, und nacher die Einführung des abgekühlten Wärmeträgers in den Kreislauf stattfindet.

2. Verfahren nach Anspruch 1 **dadurch gekennzeichnet, dass** der Neigungswinkel des geothermischen Tunnels (3,4) einen maximalen Wert von 30 Graden hat.

3. Verfahren nach Anspruch 1 **dadurch gekennzeichnet, dass** das Inertgas als ein Wärmeträger verwendet wird.

4. Verfahren nach Anspruch 1 **dadurch gekennzeichnet, dass** den Tunnels mehr als zwei elektrische Kraftwerke (E) nach der Sternschaltung verbunden sind.

5. Verfahren nach Anspruch 1 **dadurch gekennzeichnet, dass** mit den Tunnels mehr als zwei elektrische Kraftwerke (E) verbunden sind, dabei befinden sich die Kraftwerke in der Ringverbindung.

## Revendications

1. Procédé pour d'utilisation de l'énergie géothermique pour obtenir d'énergie électrique réalisée par tunnels (3,4) géothermiques connectés à la centrale électrique (1,2) où les tunnels sont parallels et disposés à la profondeur de 15-30 km du sol, le procédé comprend les étapes suivantes: dans l'un des tunnels (3) de la centrale électrique est guidé l'agent de transfert de chaleur, lequel se réchauffe en passant par le tunnel géothermique, l'agent de transfert de chauleur réchauffé est guidé par l'autre tunnel géothermique (4) au sol, à la centrale électrique, où l'énergie thermique est transformée en énergie électrique, **caractérisé en ce que** pour réaliser le procédé, entre au moins deux centrales électriques (1,2) sont disposés les tunnels géothermiques (3,4) à la profondeur du sol hₘₐₓ, où la longueur totale du tunnel 1>4 hₘₐₓ et 1=1₁ +1₂ +1₃ , où 1₁=1₃=2hₘₐₓ et l'angle d'inclination sur les sections 1₁ et 1₃ s'altère de 0 à α degrés et sur la section 1₂ le tunnel est horizontal; l'agent de transfert de chaleur froid est guidé des centrales électriques connectées par tunnels aux tunnels géothermiques, en passant par les tunnels, l'agent de transfert de chaleur froid se réchauffe et l'agent de transfert de chaleur chaud est guidé aux centrales électriques, dans les centrales életriques l'énergie de l'agent de transfert de chaleur est transformée en énergie électrique, où avec cela a lieu le refroidissement de l'agent de transfert de chaleur et l'agent de transfert de chaleur refroidi est dirigé de nouveau en circulation.

2. Procédé, selon la revendication 1, **caractérisé en ce que** l'angle d'inclination maximum du tunnel géothermique est de 30 degrés.

3. Procédé, selon la revendication 1, **caractérisé en ce que** pour l'agent de transfert de chaleur sert le gaz inerte.

4. Procédé, selon la revendication 1, **caractérisé en ce que** par tunnels sont connectées plus de deux centrales électriques (E) connectées en couplage en étoile.

5. Procédé, selon la revendication 1, **caractérisé en ce que** par tunnels sont connectées plus de deux centrales électriques (E) connectées en circulation.
